# EUROPEAN PATENT SPECIFICATION

(11) **EP 2 429 956 B1**
(45) Date of publication and mention of the grant of the patent: **15.10.2014**
(21) Application number: 10764744.8
(22) Date of filing: 16.04.2010
(51) Int. Cl.: C02F 5/08, C02F 1/70, C23F 11/18, C23F 15/00, F16L 58/00, H02K 9/19, H02K 9/24, H02K 9/26

(54) **SCALING, DEPOSITION AND GENERAL COPPER CORROSION ELIMINATION IN CLOSED COOLING WATER SYSTEMS**
ELIMINIERUNG VON SCHUPPENBILDUNG, ABLAGERUNGEN UND ALLGEMEINER KUPFERKORROSION IN GESCHLOSSENEN KÜHLWASSERSYSTEMEN
ÉLIMINATION D'ENTARTRAGE, DE DÉPÔT ET DE CORROSION GLOBALE DE CUIVRE DANS DES SYSTÈMES À EAU DE REFROIDISSEMENT FERMÉS

(30) Priority: 16.04.2009 SE 0950250
(43) Date of publication of application: 21.03.2012
(73) Proprietor: Swedish Metallurgy and Mining AB, 114 28 Stockholm (SE)
(72) Inventor: GRINDER, Olle, SE-162 71 Vällingby (SE); HULTQVIST, Gunnar, SE-640 61 Stallarholmen (SE); SZAKALOS, Peter, SE-112 40 Stockholm (SE)
(74) Representative: Johansson, Lars E.
(86) International application number: PCT/SE2010/050409
(87) International publication number: WO 2010/120240

(56) References cited:
- US-A- 3 431 927
- US-A- 3 431 927
- US-A1- 2002 021 778
- US-A1- 2002 021 778
- US-A1- 2002 117 452
- US-B2- 6 596 175
- MARTYNOVA 0 I ET AL: "Water chemistry of cooling systems made from copper-based materials in the loops of power-generating units", THERMAL ENGINEERING, INTERPERIODICA PUBLISHING, RU, vol. 36, no. 11, 1 November 1989 (1989-11-01), pages 614-616, XP003027024, ISSN: 0040-6015
- MARTYNOVA 0.I. ET AL: 'Water chemistry of cooling systems made from copper-based materials in the loops of power-generating units' THERMAL ENGINEERING vol. 36, no. 11, November 1989, pages 614 - 616, XP003027024

## Description

### TECHNICAL FIELD

The present invention relates to cooling water systems. More-specifically, the invention relates to a method of eliminating general copper corrosion and thereby solid corrosion product deposits in any closed loop cooling water systems, where the cooling water comes into contact with copper or copper alloys.

The invention also relates to a closed loop cooling water system of the kind where the cooling water comes into contact with copper or copper alloys.

The invention improves the performance of closed cooling water systems in contact with copper metal, since copper corrodes under formation of a solid corrosion product. This product accumulates as debris, such that coolant flow through cooling system components is significantly restricted or even blocked altogether, which negatively influences the function of the cooling systems.

### BACKGROUND ART

In all closed cooling water systems using pure deionized and deaerated water, a possible general copper corrosion is previously thought to be due to an incomplete deaeration. Specifically three critical fields are exemplified here, *viz*. water cooled power generators, and particle accelerators and nuclear fusion reactors (such as ITER).

### Description of the problem in water cooled power generators

Industrial electrical power generators are large, heavy industrial machines having internal liquid cooling systems for their stators. These stators each have a closed liquid cooling system referred to as a stator water cooling system (SWCS). Stator cooling fluid, e.g., deionized water, circulates through the SWCS to cool the windings in the stator. The cooling fluid removes heat from the stator windings generated by the high energy electrical current flowing through the windings. The SWCS includes a network of cooling passages throughout the stator, which passages extend between the windings. These cooling passages should remain open and free of obstructions to ensure a high flow of coolant fluid to all sections of the stator. The SWCS also includes several components external of the stator, including piping, such as coolant pumps, filters, a reservoir tank and a strainer.

To ensure a continuous flow of the coolant through the SWCS, the SWCS includes a strainer to remove debris, i.e. solid corrosion products from copper corrosion, and other particles which may have become suspended within the coolant fluid. If not removed from the coolant, debris and particles tend to clog and obstruct the cooling passages of the SWCS. Removal of debris and particles from the cooling fluid is hence needed to avoid clogging of the stator cooling passages. The strainer captures debris and particles as the coolant flows through the strainer. By removing debris and particles from the cooling water, the strainer serves to keep the cooling passages open to the flow of cooling fluid. The strainer is usually positioned in a low temperature portion of the stator water cooling system, just upstream of the generator in the coolant piping. The strainer is generally a stainless steel mesh filter located in SWCS coolant piping external and upstream of the stator.

The mesh of the strainer has a tendency to accumulate copper corrosion products (hitherto believed to be mainly copper oxides) from the water of the SWCS. The oxide builds up on the wires of the mesh and reduces the openings in the mesh, through which the coolant is to flow. As the deposition of copper oxide of the strainer increases, the resistance of the strainer to the coolant flow similarly increases. A strainer with oxide deposits obstructs the flow of the cooling system, reduces the flow of cool fluid through the stator, and disrupts proper cooling of the stator. There is a long-felt need for techniques that reduce the deposition of corrosion products on a SWCS strainer and thereby improve the flow of coolant through the SWCS. Deposition of copper on the SWCS strainer is often due to deposits of compounds of metals dissolved in the coolant that form on the wire mesh of the strainer. The conductive windings of the stator are generally metallic copper (Cu). Small amounts of the copper from the stator windings dissolve into the coolant as the coolant flows over the windings. Both solid corrosion product debris and precipitates of copper ions deposit on the mesh of the strainer mainly as CuO, hitherto believed to be mainly a hydrogen free copper oxide.

### Description of the problem in water cooled particle accelerators

Particle accelerators (linear or circular) are devices that use an electric field to accelerate electrically charged particles to high speeds and to contain them. Corrosion of copper is a critical issue in most accelerators. Components made of copper are routinely cooled by deionized, low-conductivity water. Release of copper oxides from the parent surface is common. The residue, comprising reddish-brown Cu₂O, black CuO and Cu-hydroxides, can accumulate such that the flow of coolant through the cooling system components is significantly restricted or blocked altogether, and the residues jeopardize the function of the cooling system and thus also of the particle accelerator system. The cooling water systems for particle accelerators are basically the same as those for cooling the stators of electrical generators. The cooling water systems for fusion reactors like ITER have much in common with those for particle accelerators, albeit the water temperature may be up to 250 °C.

### Prior art disclosures

JP 3239143 discloses the use of a strong electric field between electrodes, and copper ions and copper oxide ions precipitate on the electrodes.
JP 9289750 discloses reduction of copper corrosion by controlling a fixed quantity of dissolved oxygen in the cooling water.
WO 99/43070 discloses the use of a large capacity deionizer resin bed that contains only a cation resin. The cation resin chemically captures copper ions in the cooling water.
WO 01/82450 discloses the use of a resin capable of retaining the Cu²⁺ ions and anions in the cooling water.
CN 1354546 discloses the use of alkaline additions to the cooling water.
CN 1354548 discloses the use of reverse osmosis equipment for purifying the cooling water.
US 6 554 006 discloses the use of an agent that dissolves or removes copper oxide deposits from the piping material surface. The generator must be disconnected during the cleaning operation.
US 6 596 175 discloses a method for dissolving CuO deposit on a strainer in a stator water cooling system by CO₂ injections.
CN 1587086 discloses the use of a Na or K type strong acid cationic exchange resin and H-type strong acidic cation exchange resin connected in parallel. Additional hydroxide is added for corrosion reduction.
KR 20050045573 discloses a cooling water purification method that uses a copper ionized water producing device.
JP 2006312154 discloses an ion exchanger for removing copper ions from cooling water systems.
CN 1865171 discloses an agent for inhibiting deposition and corrosion of copper in cooling water systems.

All of the prior art disclosures referred to above assume that corrosion is not caused by the water itself but by dissolved O₂-gas in the water. Consequently, prior art focuses only on how to reduce the problem caused by copper corrosion and deposition of corrosion products, or how to reduce the maintenance cost, but the suggested solutions do not eliminate the root of the problem, *i.e.* the corrosion of copper.

As an illustrative example, a paper by Martynova O.I., et al."Water chemistry of cooling water systems made from copper-based materials in the loops of power-generating units" Teploenergetika (11) 21-24 (1989) discloses that small additions (up to 60 µg/kg water) of hydrogen to the cooling water reduce (but do not eliminate) the general copper corrosion.

Another publication, US 2002/0021778 A1, discloses that it is also known in the nuclear power industry that addition of hydrogen to the cooling water in fission reactors eliminates a special corrosion phenomenon, i.e. stress corrosion cracking and intergranular stress corrosion cracking (SCC and IGSCC) of the metallic components. To suppress stress corrosion cracking, zirconium hydroxide and hydrogen are injected into the reactor cooling water. The injection of zirconium hydroxide is necessary, since it is believed that an increase in the amount of hydrogen injection causes increase in an amount of radioactive nitrogen exhausted to the main steam system, which increases the radiation dose rate of the main steam system. The beneficial effect of hydrogen addition is obtained by a neutralization of dissolved oxygen gas and oxidative radiolysis products such as hydrogen peroxide in the water, i.e. not by eliminating general corrosion by water itself.

In US 3,431,927 hydrogen gas is supplied to increase the permissible flow velocity on a liquid flowing on a copper surface. The supplied hydrogen reduces erosion corrosion. Nothing is said about reducing or eliminating general copper corrosion.

### DISCLOSURE OF THE INVENTION

The object of the present invention is to provide a method of eliminating general copper corrosion and thereby solid corrosion product deposits in any closed loop cooling water systems of the kind where the cooling water comes into contact with copper or copper alloys. The only type of corrosion that occurs on copper metal exposed to reasonable pure cooling waters is general corrosion, not SCC.

In accordance with the invention, this object is achieved by supplying hydrogen gas to the liquid cooling water in the closed loop cooling water system to maintain in said liquid water
a) at least 80 µg hydrogen / kg water for a cooling water system operating up to around 75 °C,
b) at least y µg hydrogen / kg water for a cooling water system operating up to around x °C, where y = (3.75 *(x-75)+80) when x is in the interval 75-87,
c) at least 125 µg hydrogen / kg water for a cooling water system operating up to around 300 °C.

Thereby general copper corrosion by water can be eliminated.

The expression "supplying hydrogen gas to the liquid cooling water" is not to be interpreted as requiring that the hydrogen is to be supplied directly into a gas phase usually existing above a surface of liquid cooling water in a closed tank. The hydrogen might as well be supplied below the surface of the liquid cooling water, from where it will bubble upward through the liquid water into the gas phase confined above the water surface. In general, it is possible to inject hydrogen anywhere in the liquid cooling water system as long as the system is sufficiently closed and circulating.

The method is especially useful for eliminating general copper corrosion and thereby solid corrosion product deposits in any closed loop cooling water systems in electrical power generators, particle accelerators and nuclear fusion reactors, such as ITER.

If required for safety reasons, the hydrogen gas may be supplied to the closed loop cooling water system together with an inert gas, preferably nitrogen.

In accordance with the invention, this object is achieved also in that a closed loop cooling water system, of the kind where the cooling water comes into contact with copper or copper alloys, comprises a hydrogen gas source, means for supplying a sufficient amount of hydrogen gas from the hydrogen gas source to a gas phase in contact with the liquid cooling water in the closed loop cooling water system to eliminate general copper corrosion by water, and control means for maintaining in the liquid water an adjustable concentration of at least 80 µg H / kg water up to 75 °C and to at least 125 µg H / kg water for water up to 300 °C.

The hydrogen gas source contains pure hydrogen or, in case of safety requirements, a mixture of hydrogen and an inert gas, preferably nitrogen, and the hydrogen gas supplying means supply the mixture to the cooling water in the closed loop cooling water system.

### BRIEF DESCRIPTION OF THE DRAWINGS

In the following, the invention will be described in more detail with reference to preferred embodiments and the appended drawings.
Fig. 1 is a block diagram of a closed loop stator winding cooling system in a preferred embodiment of the present invention.
Fig. 2 is a diagram showing partial pressures of O₂ and H₂ during exposure of copper to deionized water.
Fig. 3 is a diagram showing the copper potential-pH (Pourbaix) with supplementary thermodynamic data of an observed hydrogen and oxygen containing corrosion product (CuO_{y}Hₓ) formed under anoxic conditions.
Fig. 4 is a diagram showing the general copper corrosion and copper immunity region (no corrosion) as a function of temperature and amount of dissolved hydrogen gas in the water.

### MODES FOR CARRYING OUT THE INVENTION

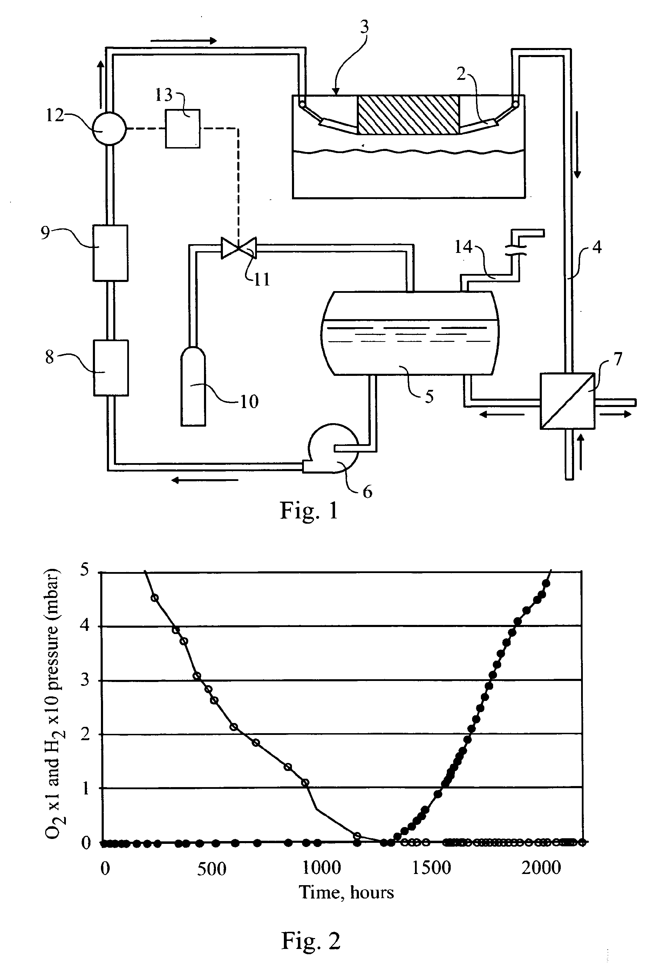

Figure 1 is a block diagram of a closed loop stator winding cooling system (SWCS) of the kind where the cooling water comes into contact with copper or copper alloys. Cooling systems of that kind are found in water cooled power generators, and particle accelerators and nuclear fusion reactors (such as ITER), for example, and they use pure deionized and deaerated water, which is regarded as giving rise to general copper corrosion.

Thus, in Fig. 1, the heat source that is to be cooled is shown as a stator winding of a generator **3,** but it can be any one of a water cooled power generator, a particle accelerator and a nuclear fusion reactor. The cooling is carried out by means of a closed loop cooling water system using pure deionized and deaerated water and of the kind where the cooling water comes into contact with copper or copper alloys. The deionized and deaerated water is supplied from a conventional deionizing and deaerating plant and is not shown. The cooling water system includes a closed tank **5,** a pump **6,** a heat exchanger **7,** and conduits such as pipes **4** for conducting the cooling water from the cooling water passage **2** in the stator of the generator **3** through the heat exchanger **7** to cool the water, and the to the tank **5.** From the tank **5,** another pipe conducts the cooling water through a filter **8** and a strainer **9** back to the generator **3.** The tank **5** also is provided with a vent **14.**

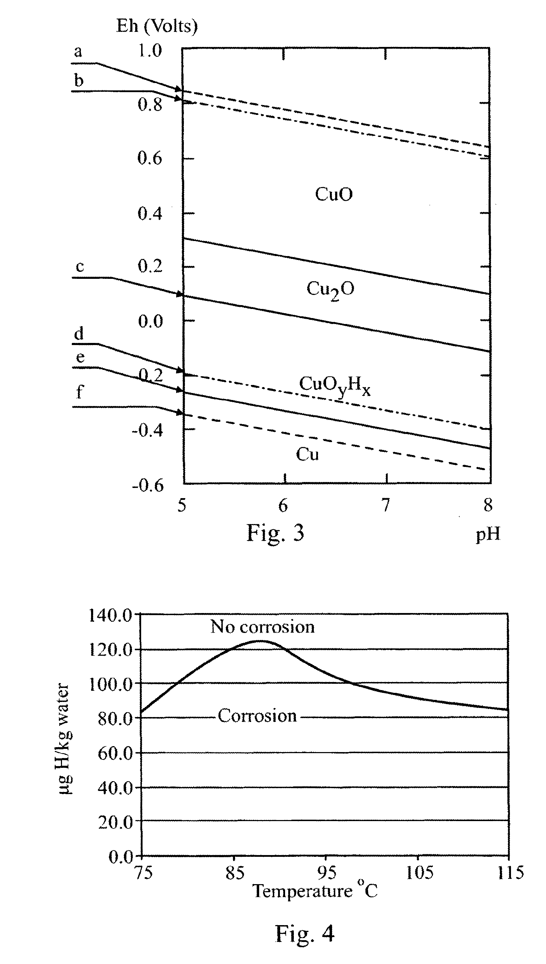

The conventional thermodynamic understanding of general copper corrosion in deionized water is incomplete. The hydrogen equilibrium for the lowest copper oxide, is hitherto believed to be around 1×10⁻¹⁶ bar at 20 °C, but our experiments have shown that there is a more stable corrosion product (a hydrogen and oxygen containing product) formed in anoxic (O₂-free) water, having a hydrogen equilibrium pressure about 13 decades higher, i.e. in the 10⁻³ bar range at 20 °C and in the 0.1 bar range around 100 °C. This surprising discovery means that if a hydrogen partial pressure in the 0.1 bar range is applied in the gas phase in contact with the liquid cooling water, general copper corrosion by water will be totally eliminated. For a cooling water system operating at up to around 300 °C, it is enough to add at least 125 µg hydrogen / kg water (peak at around 87 °C, ~110 mbar H₂, see Fig. 4) to eliminate corrosion and problem with release/deposition of solid corrosion products (debris). The lifetime of a copper pipe for cooling water in the stator coil, for example, can be extended significantly at the same time as the maintenance cost will be drastically reduced by the present invention.

Consequently, as will be seen from Fig. 1, a hydrogen source **10** shown as a gas bottle, is connected to the closed tank **5** in order to supply hydrogen to the usually existing gas phase confined above the water level in the closed tank and in chemical equilibrium with the water. In applications where explosive and flammable gases are not allowed, a hydrogen concentration of around 5 % by volume in a gas mixture with an inert gas like nitrogen can be used to avoid general copper corrosion but then with an overpressure of at least 1 bar. The gas bottle **10** may contain suitable mixture of hydrogen and the inert gas, or pure hydrogen, for supply to the closed tank **5.** Usually, a gas mixture of nitrogen with 10-15 % by volume of hydrogen is regarded as explosion proof. Of course, a noble gas or a mixture of noble gases may replace at least part of the nitrogen. If desired, the pipe from the gas source **10** may discharge hydrogen, possibly mixed with the inert gas, under the surface of the water in the tank **5.** However, as a rule, it is unnecessary to bubble the gas/gases through the water to gain time in reaching equilibrium, so as to make the corrosion of copper come to a halt. The partial pressure of hydrogen in the gas phase above the water surface in the closed tank will give the desired result. On the other hand, if desired and especially in a case where there is no gas phase above the water in the closed tank **5**, it would also be possible as an alternative to inject the hydrogen directly into the cooling water flow at any suitable position but preferably at a point downstream of the tank **5**.

In the preferred embodiment of the present invention shown in Fig. 1, the closed cooling water system of the present invention, comprises the hydrogen source **10** and means for supplying a sufficient amount of hydrogen gas from the hydrogen gas source **10** to the cooling water in the closed loop cooling water system to eliminate general copper corrosion by water. In the shown embodiment, these means are formed by a pipe or other conduit having a valve **11** and leading from hydrogen source **10** to the tank **5**.

Fig. 2 is a diagram showing partial pressures of O₂ (open circles) and H₂ (filled circles) during exposure of copper to deionized water. By use of a palladium membrane it was possible to measure the partial pressure of H₂ separately. At time zero, the deionized water was enclosed with some dissolved O₂ in the liquid water. From start to 1,200 hours, the temperature was 20 °C, from 1,200 hours to 2,100 hours it was 62 °C. After around 1,300 h, all dissolved oxygen was consumed by general copper corrosion. According to conventional thermodynamics, the general copper corrosion should stop here, but as shown in the figure, hydrogen evolving general copper corrosion starts now by reaction with water.

Fig. 3 is a diagram showing the potential-pH (Pourbaix) diagram for copper with supplementary thermodynamic data of an observed hydrogen and oxygen containing corrosion product (CuO_{y}Hₓ) formed under anoxic conditions. The lines (a) to (f) in the diagram are explained in the table below. The hydrogen containing corrosion product is indicated by the redox-equilibrium or line (e), and the close position just above the standard hydrogen electrode (f) means that copper corrodes by water itself under slow hydrogen evolution, p(H₂) ≈ 10⁻³ -10⁻² bar (depending on temperature as indicated in Fig. 4), i.e. H₂-gas bubbles are normally not seen. The difference between (c) and (e) equilibrium represents a reduction of the conventional copper immunity range. The lines (b) and (d) represent two extreme situations with water in equilibrium with the atmospheric oxygen pressure and hydrogen pressure respectively; in both cases, general copper corrosion will occur.

| **Line** | **Condition** | **O₂ gas (bar)** | **H₂ gas (bar)** | **Potential (at pH 7)** |
|---|---|---|---|---|
| a | Standard oxygen electrode | 1 | ~10⁻⁴² | 0.816 |
| b | Water in equilibrium with equilibrated air | 0.21 | ~10⁻⁴² | 0.806 |
| c | Cu₂O/ CuO_{y}Hₓ -equilibrium | ~10⁻⁵² | ~10⁻¹⁶ | 0.057 |
| d | O₂-free water in equilibrium with the atmospheric H₂-pressure | ~10⁻⁷¹ | 5×10⁻⁷ | -0.227 |
| e | CuO_{y}Hₓ/Cu -equilibrium | ~10⁻⁸¹ | 10⁻³-10⁻²* | -0.325 |
| f | Standard hydrogen electrode | ~10⁻⁸⁷ | 1 | -0.413 |

Fig. 4 is a diagram showing the general copper corrosion and copper immunity region (no corrosion) as a function of temperature and amount of dissolved hydrogen gas in the water. The diagram was determined from experimental data in a closed loop cooling system. A peak at around 87 °C was found, corresponding to around 125 µg hydrogen / kg water or 110 mbar H₂-gas in equilibrium with water.

To eliminate general corrosion and problem with release/deposition of solid corrosion products (debris) the dosing of hydrogen should preferably be at the full drawn line of Fig. 4 or higher. For a cooling water system operating up to around 75 °C, the dosing of hydrogen should preferably be at least 80 µg hydrogen / kg water. For a cooling water system operating up to around x °C, where x is in the interval 75-87, the dosing of hydrogen should preferably be at least y µg hydrogen / kg water, where y = (3.75× (x - 75) + 80). Similarly, hydrogen preferably is supplied to maintain in said liquid water at least 125 µg hydrogen / kg water for a cooling water system operating up to around 300°C. I.e. it is the peak temperatures of the system that determines the amount of hydrogen that is preferred to add in order to eliminate the general copper corrosion. To reduce the risk of errors in sensors readings or other unpredictable factors, the hydrogen dosage can preferably be set to be at least 140 µg hydrogen / kg water regardless of operating temperatures.

The dosing of hydrogen can be accomplished by providing the control means as shown in the embodiment of Fig. 1, these control means comprise a hydrogen sensor **12** mounted in the cooling water pipe from the tank **5** to the generator **3**, and sending a signal corresponding to the sensed value to a control unit **13**, which controls valve **11**, provided in the pipe or other conduit leading from the hydrogen source **10** to the tank **5**. If desired, the hydrogen sensor **12** may alternatively be located in the gas phase inside the tank **5,** but monitoring the H₂ content in the cooling water immediately upstream of the generator **3** is more likely to give a reliable result.

The product formed in anoxic (O₂-free) water may be described as CuO_{y} Hₓ. This product is initially reddish-brown and when the product grows thicker it changes color to black.

When using this technique in a cooling water system it is recommended to initially add an amount of hydrogen that is substantially higher than these equilibrium values in order to accelerate the removal of dissolved oxygen. It deserves mentioning, that the hydrogen-oxygen reaction (formation of water) will take place on all solid surfaces in the cooling system. In fact, any formed solid corrosion product will be reduced to metallic copper when a sufficient amount of hydrogen is added to the cooling water.

### INDUSTRIAL APPLICABILITY

The life of the stator coil copper pipe for cooling water in an electric generator can be extended significantly by this invention at the same time as the maintenance cost will be reduced drastically. Although the present invention above is described with reference to a closed loop stator winding cooling system (SWCS) for a water cooled electric generator of the kind where the cooling water comes into contact with copper or copper alloys, it is obvious that the invention also may be applied in other cooling systems of the kind using pure deionized and deaerated water, which is regarded as giving rise to general copper corrosion, such as closed cooling water systems for particle accelerators and nuclear fusion reactors (such as ITER), for example. Of course, the invention may also be applied if the water is not deaerated, but then it will take longer time to stop the corrosion of copper, and more hydrogen will be consumed.

## Claims

1. A method of eliminating general copper corrosion and thereby solid corrosion product deposits in any closed loop cooling water systems of the kind where the cooling water comes into contact with copper or copper alloys, **characterized by** supplying hydrogen gas to the liquid cooling water in the closed loop cooling water system to maintain in said water
a) at least 80 µg hydrogen / kg water for a cooling water system operating up to around 75 °C,
b) at least y µg hydrogen / kg water for a cooling water system operating up to around x °C, where y = (3.75 *(x-75)+80) when x is in the interval 75-87,
c) at least 125 µg hydrogen / kg water for a cooling water system operating up to around 300 °C.

2. A method as claimed in claim 1, **characterized by** supplying hydrogen to maintain in said liquid water at least 140 µg hydrogen / kg water for a cooling water system operating up to around 300 °C.

3. A method as claimed in any one of claims 1-2, wherein the hydrogen gas is supplied to the closed loop cooling water system together with an inert gas.

4. A method as claimed in claim 3, wherein the inert gas is nitrogen.

5. The use of the method as claimed in any one of claims 1-4 for eliminating general copper corrosion and thereby solid corrosion product deposits in any closed loop cooling water systems in electrical power generators.

6. The use of the method as claimed in any one of claims 1-5 for eliminating general copper corrosion and thereby solid corrosion product deposits in any closed loop cooling water systems in particle accelerators.

7. The use of the method as claimed in any one of claims 1-6 for eliminating general copper corrosion and thereby solid corrosion product deposits in any closed loop cooling water systems in nuclear fusion reactors.

8. A closed loop cooling water system operating up to around 75 °C and of the kind where the cooling water comes into contact with copper or copper alloys, **comprising** a hydrogen gas source (**10**), and means (**11-13**) for supplying a sufficient amount of hydrogen gas from the hydrogen gas source (**10**) to the cooling water in the closed loop cooling water system for maintaining in the liquid water a concentration of at least 80 µg hydrogen / kg water to eliminate general copper corrosion by water.

9. A closed loop cooling water system operating up to around 300 °C and of the kind where the cooling water comes into contact with copper or copper alloys, **comprising** a hydrogen gas source (**10**), and means (**11-13**) for supplying a sufficient amount of hydrogen gas from the hydrogen gas source (**10**) to the cooling water in the closed loop cooling water system for maintaining in the liquid water a concentration of at least 125 µg hydrogen / kg water to eliminate general copper corrosion by water.

10. A closed loop cooling water system as claimed in claim 8 or 9, wherein the hydrogen gas source (**10**) contains pure hydrogen or, in case of safety requirements, a mixture of hydrogen and an inert gas, preferably nitrogen, and wherein the hydrogen gas supplying means (**11-13**) supply the mixture to the cooling water in the closed loop cooling water system.

## Patentansprüche

1. Verfahren zum Eliminieren von allgemeiner Kupferkorrosion und dadurch von festen Korrosionsproduktablagerungen in allen geschlossenen Kühlwasserkreislaufsystemen von der Art, bei denen das Kühlwasser mit Kupfer oder Kupferlegierungen in Kontakt kommt,
**gekennzeichnet durch** Zuführen von Wasserstoffgas zu dem flüssigen Kühlwasser in dem geschlossenen Kühlwasserkreislaufsystem, um in dem Wasser
a) mindestens 80 µg Wasserstoff/kg Wasser für ein Kühlwassersystem, das bei ungefähr 75 °C betrieben wird,
b) mindestens y µg Wasserstoff/kg Wasser für ein Kühlwassersystem, das bei ungefähr x °C betrieben wird, wobei y = (3,75 *(x-75)+80), wenn x in dem Intervall von 75 bis 87 liegt,
c) mindestens 125 µg Wasserstoff/kg Wasser für ein Kühlwassersystem, das bei ungefähr 300 °C betrieben wird, aufrechtzuerhalten.

2. Verfahren nach Anspruch 1, **gekennzeichnet durch** Zuführen von Wasserstoff, um in dem flüssigen Wasser mindestens 140 µg Wasserstoff/kg Wasser für ein Kühlwassersystem aufrechtzuerhalten, das bei ungefähr 300 °C betrieben wird.

3. Verfahren nach irgendeinem der Ansprüche 1 bis 2, wobei das Wasserstoffgas dem geschlossenen Kühlwasserkreislaufsystem zusammen mit einem Inertgas zugeführt wird.

4. Verfahren nach Anspruch 3, wobei das Inertgas Stickstoff ist.

5. Verwendung des Verfahrens nach irgendeinem der Ansprüche 1 bis 4 zum Eliminieren von allgemeiner Kupferkorrosion und dadurch von festen Korrosionsproduktablagerungen in jeglichen geschlossenen Kühlwasserkreislaufsystemen in elektrischen Stromgeneratoren.

6. Verwendung des Verfahrens nach irgendeinem der Ansprüche 1 bis 5 zum Eliminieren von allgemeiner Kupferkorrosion und dadurch von festen Korrosionsproduktablagerungen in jeglichen geschlossenen Kühlwasserkreislaufsystemen in Teilchenbeschleunigern.

7. Verwendung des Verfahrens nach irgendeinem der Ansprüche 1 bis 6 zum Eliminieren von allgemeiner Kupferkorrosion und dadurch von festen Korrosionsproduktablagerungen in jeglichen geschlossenen Kühlwasserkreislaufsystemen in Kernfusionsreaktoren.

8. Geschlossenes Kühlwasserkreislaufsystem, das bei ungefähr 75 °C betrieben wird und von der Art ist, bei der das Kühlwasser mit Kupfer oder Kupferlegierungen in Kontakt kommt, umfassend eine Wasserstoffgasquelle (10) und Mittel (11 bis 13) zum Zuführen einer ausreichenden Menge an Wasserstoffgas von der Wasserstoffgasquelle (10) zu dem Kühlwasser in dem geschlossenen Kühlwasserkreislaufsystem, um eine Konzentration von mindestens 80 µg Wasserstoff/kg Wasser in dem flüssigen Wasser aufrechtzuerhalten, um allgemeine Kupferkorrosion durch Wasser zu eliminieren.

9. Geschlossenes Kühlwasserkreislaufsystem, das bei ungefähr 300 °C betrieben wird und von der Art ist, bei der das Kühlwasser mit Kupfer oder Kupferlegierungen in Kontakt kommt, umfassend eine Wasserstoffgasquelle (10) und Mittel (11 bis 13) zum Zuführen einer ausreichenden Menge an Wasserstoffgas von der Wasserstoffgasquelle (10) zu dem Kühlwasser in dem geschlossenen Kühlwasserkreislaufsystem, um eine Konzentration von mindestens 125 µg Wasserstoff/kg Wasser in dem flüssigen Wasser aufrechtzuerhalten, um allgemeine Kupferkorrosion durch Wasser zu eliminieren.

10. Geschlossenes Kühlwasserkreislaufsystem nach Anspruch 8 oder 9, wobei die Wasserstoffgasquelle (10) reinen Wasserstoff oder, aufgrund von Sicherheitsanforderungen, eine Mischung aus Wasserstoff und einem Inertgas enthält, vorzugsweise Stickstoff, und wobei die Zuführmittel von Wasserstoffgas (11 bis 13) dem Kühlwasser in dem geschlossenen Kühlwasserkreislaufsystem die Mischung zuführen.

## Revendications

1. Un procédé d'élimination de la corrosion du cuivre en général et, de ce fait, d'élimination des dépôts solides de produits de corrosion dans toutes sortes de systèmes à eau de refroidissement en circuit fermé dans lesquels l'eau de refroidissement est en contact avec du cuivre ou des alliages de cuivre, **caractérisé par** le fait d'alimenter de l'hydrogène gazeux à l'eau de refroidissement liquide dans le système à eau de refroidissement en circuit fermé, de manière à maintenir dans ladite eau
a) au moins 80 µg d'hydrogène / kg d'eau pour un système à eau de refroidissement fonctionnant jusqu'à environ 75°C,
b) au moins y µg d'hydrogène / kg d'eau pour un système à eau de refroidissement fonctionnant jusqu'à environ x°C, où y = (3,75*(x-75)+80) lorsque x est dans l'intervalle allant de 75 à 87,
c) au moins 125 µg hydrogène/kg d'eau pour un système à eau de refroidissement fonctionnant jusqu'à environ 300°C.

2. Un procédé tel que revendiqué dans la revendication 1, **caractérisé par** le fait d'alimenter de l'hydrogène pour maintenir dans ladite eau liquide au moins 140 µg hydrogène / kg d'eau pour un système à eau de refroidissement fonctionnant jusqu'à environ 300°C.

3. Un procédé tel que revendiqué dans l'une quelconque des revendications 1 à 2, dans lequel l'hydrogène gazeux est alimenté dans le système à eau de refroidissement en circuit fermé avec un gaz inerte.

4. Un procédé selon la revendication 3, dans lequel le gaz inerte est l'azote.

5. L'utilisation du procédé tel que revendiqué dans l'une quelconque des revendications 1 à 4 pour l'élimination de la corrosion du cuivre en général et, de ce fait, l'élimination des dépôts solides de produits de corrosion dans toutes sortes de systèmes à eau de refroidissement en circuit fermé, de générateurs électriques.

6. L'utilisation du procédé tel que revendiqué dans l'une quelconque des revendications 1 à 5 pour l'élimination de la corrosion du cuivre en général et ainsi des dépôts solides de produits de corrosion dans les systèmes à eau de refroidissement en circuit fermé, d'accélérateurs de particules.

7. L'utilisation du procédé tel que revendiqué dans l'une quelconque des revendications 1 à 6 pour l'élimination de la corrosion du cuivre en général et, de ce fait, l'élimination des dépôts solides de produits de corrosion dans les systèmes à eau de refroidissement en circuit fermé, de réacteurs à fusion nucléaire.

8. Un système à eau de refroidissement en circuit fermé fonctionnant jusqu'à environ 75 °C, et du type dans lequel l'eau de refroidissement entre en contact avec du cuivre ou des alliages de cuivre, comprenant une source (10) d'hydrogène gazeux et des moyens (11-13) pour fournier une quantité suffisante d'hydrogène gazeux, à partir de la source (10) d'hydrogène gazeux, à l'eau de refroidissement du circuit à eau de refroidissement en circuit fermé, pour maintenir dans l'eau sous forme liquide une concentration d'au moins 80 µg d'hydrogène / kg d'eau afin d'éliminer la corrosion générale du cuivre par l'eau.

9. Un système à eau de refroidissement en circuit fermé fonctionnant jusqu'à environ 300°C, et du type dans lequel l'eau de refroidissement entre en contact avec du cuivre ou des alliages de cuivre, comprenant une source (10) d'hydrogène gazeux et des moyens (11-13) pour fournir une quantité suffisante d'hydrogène gazeux, à partir de la source (10) d'hydrogène gazeux, à l'eau de refroidissement dans le circuit à eau de refroidissement en circuit fermé pour maintenir dans l'eau sous forme liquide une concentration d'au moins 125 µg d'hydrogène / kg d'eau afin d'éliminer la corrosion générale du cuivre par l'eau.

10. Un système à eau de refroidissement en circuit fermé selon la revendication 8 ou la revendication 9, dans lequel la source (10) d'hydrogène gazeux contient de l'hydrogène pur ou, en cas d'exigences de sécurité, un mélange d'hydrogène et d'un gaz inerte, de préférence l'azote, et dans lequel les moyens (11-13) d'alimentation en hydrogène gazeux fournissent le mélange à l'eau de refroidissement dans le système à eau de refroidissement en circuit fermé.
